# EUROPÄISCHE PATENTSCHRIFT

(11) **EP 4 076 995 B1**
(45) Veröffentlichungstag und Bekanntmachung des Hinweises auf die Patenterteilung: **22.05.2024**
(21) Anmeldenummer: 20799689.3
(22) Anmeldetag: 28.10.2020
(51) Int. Cl.: B60C 11/12

(54) **FAHRZEUGLUFTREIFEN**
PNEUMATIC TYRE FOR A VEHICLE
BANDAGE PNEUMATIQUE POUR UN VÉHICULE

(30) Priorität: 19.12.2019 DE 102019220135
(43) Veröffentlichungstag der Anmeldung: 26.10.2022
(73) Patentinhaber: Continental Reifen Deutschland GmbH, 30175 Hannover (DE)
(72) Erfinder: SCHLITTENHARD, Jan, 30165 Hannover (DE)
(74) Vertreter: Continental Corporation
(86) Internationale Anmeldenummer: PCT/EP2020/080316
(87) Internationale Veröffentlichungsnummer: WO 2021/121748

(56) Entgegenhaltungen:
- EP-A2- 2 199 111
- WO-A1-2016/155855
- WO-A1-2019/001789
- DE-A1-102018 206 902

## Beschreibung

Die Erfindung betrifft einen Fahrzeugluftreifen mit einem Laufstreifen mit Profilpositiven mit Einschnitten, welche in Draufsicht parallel zueinander und zur axialen Richtung unter einem Winkel von 0° bis 50° verlaufen, eine Breite von 0,4 mm bis 0,8 mm, in Draufsicht einen in Form einer harmonischen Welle verlaufenden, mittleren Einschnittabschnitt mit einer der Ausbreitungsrichtung der Welle entsprechenden Wellenmittellinie und zwei randseitige Einschnittabschnitte aufweisen, deren Verlauf eine parallel zur Wellenmittellinie verlaufenden Einschnittbasislinie definiert, wobei die Wellenmittellinie des mittleren Einschnittabschnittes zur Einschnittbasislinie des Einschnittes parallelversetzt verläuft und ein zwischen der Wellenmittellinie und der Einschnittbasislinie als gegenseitiger lichter Abstand ermittelter Versatz 75% bis 400% der Amplitude der harmonischen Welle des mittleren Einschnittabschnittes beträgt, wobei sich der mittlere Einschnittabschnitt in Draufsicht aus gerade verlaufenden, jeweils die Wellenmittellinie querenden Teilabschnitten und gebogen verlaufenden Teilabschnitten zusammensetzt, wobei ein gerade verlaufender Teilabschnitt abwechselnd auf einen gebogen verlaufenden Teilabschnitt folgt.

Es ist bekannt, Profilpositive von Laufstreifen von Fahrzeugluftreifen, insbesondere von Winterreifen, mit Einschnitten verschiedenster Ausgestaltung zu versehen, um dem Fahrzeugluftreifen einen guten Nass-, Schnee- und Eisgriff zu verleihen. Die Einschnitte reduzieren bekannter Weise die Längs- und Quersteifigkeit der Profilpositive, wobei wellenförmig verlaufende Einschnitte, bedingt durch die unter Querbelastung auftretende gegenseitige Abstützung bzw. Verzahnung der durch die Einschnitte gebildeten Profilsegmente, vorteilhafter Weise die Quersteifigkeit in geringerem Ausmaß verringern als gerade verlaufende Einschnitte. Dies ist vor allem für die Handlingeigenschaften des Reifens günstig. Besonders günstig sind Einschnitte mit einem in Draufsicht wellenförmig verlaufenden Einschnittabschnitt und in Draufsicht gerade oder leicht gebogen verlaufenden randseitigen Einschnittabschnitten. Mit solchen randseitigen Einschnittabschnitten kann das Bilden von spitzwinkligen Blockeckbereichen bei den Einschnittenden gezielt vermieden werden. Spitzwinklige Blockecken neigen nämlich dazu, verstärkt abzureiben.

Ein Fahrzeugluftreifen der eingangs genannten Art ist beispielsweise aus der EP 2 199 111 A1 bekannt. Der Fahrzeugluftreifen weist einen Laufstreifen mit schulterseitigen und mittleren Profilblöcken auf, welche mit Einschnitten versehen sind. Die in den schulterseitigen Profilblöcken befindlichen Einschnitte (nachfolgend als "schulterseitige Einschnitte" bezeichnet) verlaufen, in Draufsicht betrachtet, zur axialen Richtung jeweils unter einem ersten Winkel und die in den mittleren Profilblöcken befindlichen Einschnitte (nachfolgend als "zentrale Einschnitte" bezeichnet) verlaufen, in Draufsicht betrachtet, zur axialen Richtung unter einem gegenüber dem ersten Winkel kleiner ausgeführten, zweiten Winkel. Jeder Einschnitt weist einen in Draufsicht in Form einer zick-zack-Welle verlaufenden, mittleren Einschnittabschnitt auf, wobei die mittleren Einschnittabschnitte der schulterseitigen Einschnitte eine größere Amplitude und eine größere Wellenlänge als die mittleren Einschnittabschnitte der zentralen Einschnitte aufweisen. Der Reifen soll im Hinblick auf die Lenkstabilität auf trockener Fahrbahn und die Schneeperformance ausbalanciert sein. Bei einem Ausführungsbeispiel weisen die schulterseitigen Einschnitte einen in Draufsicht in Form einer harmonischen Welle verlaufenden, mittleren Einschnittabschnitt und zwei fluchtend miteinander verlaufende, randseitige Einschnittabschnitte auf, wobei die Wellenmittellinie des mittleren Einschnittabschnittes zur Einschnittbasislinie parallel versetzt ist und der zwischen der Wellenmittellinie und der Einschnittbasislinie als gegenseitiger lichter Abstand ermittelte Versatz 100% der Amplitude beträgt. Der mittlere Einschnittabschnitt setzt sich aus in Draufsicht aus gerade verlaufenden, jeweils die Wellenmittellinie querenden Teilabschnitten und gebogen verlaufenden Teilabschnitten zusammen, wobei ein gerade verlaufender Teilabschnitt abwechselnd auf einen gebogen verlaufenden Teilabschnitt folgt.

Die DE 10 2018 206 902 A1 offenbart einen Fahrzeugluftreifen mit einem Laufstreifen mit Profilpositiven mit Einschnitten, welche einen radial äußeren Einschnittabschnitt mit einer ersten Wellenform und einen radial inneren Einschnittabschnitt mit einer zweiten Wellenform aufweisen, wobei die beiden Wellenformen übereinstimmende Wellenlängen besitzen und um 180° zueinander versetzt sind. Der Fahrzeugluftreifen soll gute Bremseigenschaften auf trockenem Untergrund und gute Griffeigenschaften auf winterlichen Fahrbahnen aufweisen.

Aus der WO 2019 001 789 A1 ist ein Fahrzeugluftreifen mit einem Laufstreifen mit Profilblöcken mit zumindest zwei Einschnitten, zumindest zwei zwischen den Einschnitten befindlichen Mikrorillen und jeweils zumindest einer zwischen den sonstigen Einschnitten befindlichen Mikrorille bekannt. Bevorzugter Weise sind in den schulterseitigen Profilblöcken Einschnitte und Mikrorillen vorgesehen, welche in Draufsicht in Form von abwechselnd in die eine und in die andere Umfangsrichtung weisenden, basislosen gleichschenkeligen Trapezen verlaufen.

Aus der WO 2016 155 855 A1 ist ein weitere Fahrzeugluftreifen mit einem Laufstreifen mit Profilpositiven mit Einschnitten bekannt. Die Einschnitte besitzen eine Breite von 0,3 mm bis 0,8 mm, verlaufen in Draufsicht zur axialen Richtung unter einem Winkel von bis zu 45° und weisen einen in Form einer harmonischen Welle verlaufenden, mittleren Einschnittabschnitt auf. Die Wellenlänge der harmonischen Welle des mittleren Einschnittabschnittes vergrößert sich ausgehend von der Laufstreifenaußenfläche radial nach innen kontinuierlich.

Ferner ist es üblich, bei winterlichen Fahrbedingungen, insbesondere auf vereisten und/oder verschneiten Fahrbahnen, Streugut auszubringen, um derart eine bessere Reifen-Fahrbahn-Haftung zu ermöglichen. Üblich als Streugut sind auftauende Streumittel, beispielsweise Streusalz, und abstumpfende Streumittel, wie kleine Steine und diverse Kiese, Schottersubstrate oder Streusplitte. Abstumpfende Streumittel werden im Vergleich zu auftauenden Streumittel günstiger Weise nicht so schnell von Neuschnee bedeckt und nicht so rasch in eine Eisdecke gedrückt, sodass sie länger wirken. Beim Fahren auf mit abstumpfenden Streumittel versehenen Straßen besteht die Gefahr, dass sich in den Einschnitten der Profilpositive des Laufstreifens Steine verklemmen ("stone-trapping"). Die Steine von üblichem Streugut weisen einen Siebdurchmesser von etwa 2 mm bis 32 mm auf. Steine mit einem Siebdurchmesser von insbesondere 8 mm bis 15 mm können sich vor allem in den Rillen des Laufstreifens verfangen. Steine mit einem Siebdurchmesser von insbesondere 3 mm bis 8 mm verfangen sich vor allem in den Einschnitten. Steine mit einem Siebdurchmesser von unter 3 mm spielen beim stone-trapping keine oder eine untergeordnete Rolle. In den Einschnitten verklemmte Steine können sich dabei in vielerlei Hinsicht nachteilig auf die Reifenperformance auswirken. Beispielsweise treten deutliche Verformungen der an die Einschnitte angrenzenden Profilsegmente auf, wodurch am Laufstreifen ein unregelmäßiges Abriebbild auftreten kann. Ferner können die Entwässerungseigenschaften und die Wirkung der Einschnittkanten beeinträchtigt werden, sodass die Nass-, Schnee- und Eisgriffperformance leidet. Darüber hinaus stellen die Steine unerwünschte und undefinierte Unwuchtmassen dar, welche sich auf nicht definierte, also unregelmäßige Weise, über den Umfang des Laufstreifens verteilt in den Einschnitten verklemmen können. Aus den verklemmten Steinen resultiert somit eine Unwucht, die unangenehme, im Fahrzeuginnenraum wahrnehmbare Vibrationen beim Fahren mit höheren Geschwindigkeiten zur Folge haben kann. Beim Fahren mit höheren Geschwindigkeiten besteht darüber hinaus die Gefahr, dass sich zuvor in den Einschnitten verklemmte Steine lösen und diese die Verkehrssicherheit beeinträchtigen (Steinschlag).

Besonders kritisch ist die Situation in den nördlichen europäischen Ländern. In diesen Ländern werden aufgrund der langandauernden und oft extremen winterlichen Bedingungen Fahrzeugluftreifen mit besonders vielen Einschnitten am Laufstreifen gefahren, wobei auf den Straßen große Mengen an abstumpfenden Streumitteln eingesetzt werden. In den Einschnitten wird das Streugut dabei regelrecht aufgesammelt.

Der Erfindung liegt daher die Aufgabe zugrunde, bei einem Fahrzeugluftreifen der eingangs genannten Art, die Gefahr von Stone-Trapping in den Einschnitten des Laufstreifens deutlich zu reduzieren.

Gelöst wird die gestellte Aufgabe gemäß der Erfindung dadurch, dass die gerade verlaufenden Teilabschnitte jeweils eine Länge von 0,5 mm bis 0,9 mm aufweisen.

Durch den Versatz zwischen dem in Form einer harmonischen Welle verlaufenden, mittleren Einschnittabschnitt und den zwei randseitigen Einschnittabschnitten "klappen" die Einschnitte beim Kontakt des abrollenden Reifens mit dem Untergrund, wobei ein Abplatten des Laufstreifens stattfindet, weniger stark als bisher bekannte Einschnitte auf, ihre Öffnungsfähigkeit ist also deutlich eingeschränkt. Dadurch ist die Wahrscheinlichkeit, dass die Einschnitte Steine aufnehmen und sich diese in den Einschnitten nachfolgend verklemmen gegenüber bekannten Reifen deutlich reduziert. Bei erfindungsgemäßen Reifen behalten die in den Profilpositiven des Laufstreifens ausgebildeten Einschnitte daher auch beim Fahren auf mit abstumpfenden Streumitteln versehenen Straßen auf besonders zuverlässige Weise ihre vorteilhafte Wirkung.

Da die gerade verlaufenden Teilabschnitte sehr kurz sind, ist die Gefahr von Stone-Trapping in diesen Bereichen äußerst gering. Günstiger Weise lassen sich die solche Einschnitte ausformenden Lamellen auf einfache und konventionelle Weise fertigen. Durch die geraden Teilabschnitte lassen sich die Einschnitte ferner auf besonders zuverlässige Weise in tadellosen Zustand am Laufstreifen ausformen.

Gemäß einer bevorzugten Ausführung beträgt der zwischen der Wellenmittellinie und der Einschnittbasislinie ermittelte Versatz 100% bis 300%, insbesondere zumindest 200%, der Amplitude der harmonischen Welle des mittleren Einschnittabschnittes.

Eine besonders günstige Einschränkung der Öffnungsfähigkeit der Einschnitte wird erzielt, wenn der zwischen der Wellenmittellinie und der Einschnittbasislinie ermittelte Versatz 100%, 200% oder 300% der Amplitude der harmonischen Welle des mittleren Einschnittabschnittes beträgt.

In diesem Zusammenhang ist es ferner günstig, wenn sich der mittlere Einschnittabschnitt über 50% bis 90% der entlang der Einschnittbasislinie ermittelten Erstreckungslänge des Einschnittes erstreckt.

Die Gefahr von Stone-Trapping ist weiter reduziert, wenn die Amplitude der harmonischen Welle des mittleren Einschnittabschnittes zumindest der Breite des Einschnittes entspricht und höchstens 1,6 mm beträgt. Der bevorzugte Maximalwert der Amplitude resultiert dabei aus einem diesseits definierten, besonderen Verhältnis zwischen einem nominellen Siebdurchmessers für Streusplitt und dem Maximalwert der Amplitude, wie in der Figurenbeschreibung näher ausgeführt ist.

Ferner ist es günstig, wenn die Wellenlänge der harmonischen Welle des mittleren Einschnittabschnittes mindestens das Fünffache der Breite des Einschnittes und höchstens 4,4 mm beträgt. Der bevorzugte Maximalwert für die Wellenlänge resultiert ebenfalls aus einem speziellen Größenverhältnis, wie weiter unten detailliert erläutert ist.

Bei einer weiteren bevorzugten Ausführung sind die Profilpositive, welche mit den Einschnitten versehen sind, Profilblöcke einer in Umfangsrichtung umlaufenden Profilblockreihe.

Ferner ist es von Vorteil, wenn die Breite der Einschnitte höchstens 0,6 mm beträgt. Solche Einschnitte gestatten eine in ihrer Form sehr variable Welle.

Gemäß einer weiteren bevorzugten Ausführungsvariante durchqueren die Einschnitte die Profilpositive. Solche Einschnitte sind vor allem im Hinblick auf die Schneegriffeigenschaften günstig, da sie - im Vergleich zu im Profilpositiv endenden Einschnitten - längere Einschnittkanten aufweisen. Für den unwahrscheinlichen Fall, dass sich in einem solchen Einschnitt ein Stein verklemmt, bestehen zudem gute Chancen. dass sich der verklemmte Stein aufgrund der im Vergleich zu einem beidseitig oder einseitig im Profilelement endenden Einschnitt etwas größeren Öffnungsfähigkeit wieder aus dem Einschnitt löst.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine vergrößerte Draufsicht auf einen Profilblock im mittleren Bereich eines Laufstreifens eines Fahrzeugluftreifens mit einer ersten Ausführungsvariante der Erfindung, Fig. 1a eine stark vergrößerte Ansicht des Details Z₁ₐ der Fig. 1,
Fig. 2 eine vergrößerte Draufsicht auf einen Profilblock im mittleren Bereich eines Laufstreifens eines Fahrzeugluftreifens mit einer zweiten Ausführungsvariante der Erfindung und
Fig. 3 eine vergrößerte Draufsicht auf einen schulterseitigen Profilblock eines Laufstreifens eines Fahrzeugluftreifens mit einer dritten Ausführungsvariante der Erfindung.

Gemäß der Erfindung ausgeführte Fahrzeugluftreifen sind insbesondere Reifen in Radialbauart für Personenkraftwagen, Vans oder Light-Trucks, wobei die Reifen zum Fahren unter winterlichen Fahrbedingungen vorgesehen sind.

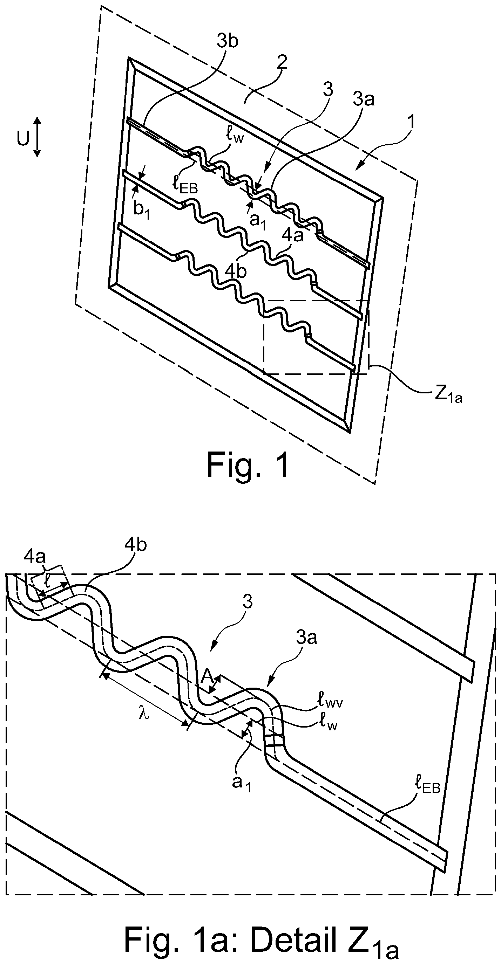

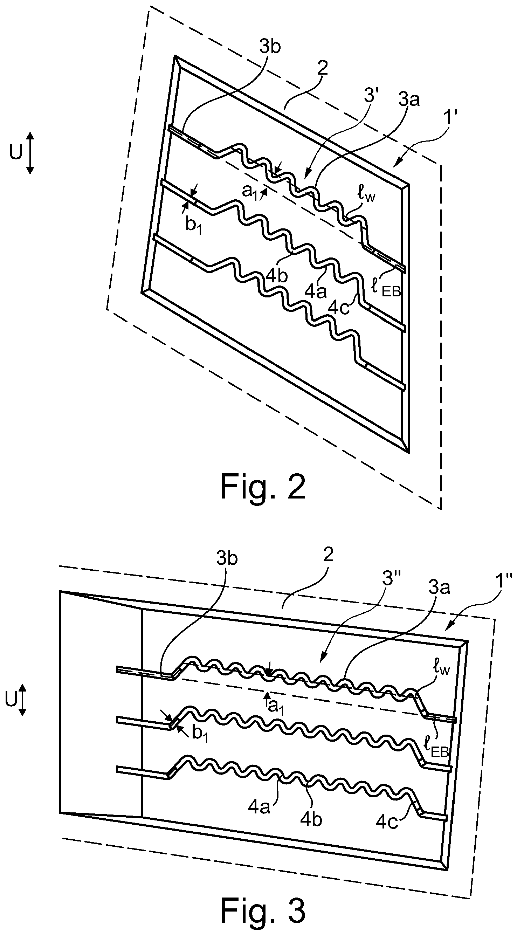

Fig. 1 und Fig. 2 zeigen jeweils eine Draufsicht auf einen im mittleren Bereich eines Laufstreifen eines Fahrzeugluftreifens befindlichen, in axialer Richtung langgestreckt parallelogrammförmigen Profilblock 1 (Fig. 1), 1' (Fig. 2). Fig. 3 zeigt eine Draufsicht auf einen in axialer Richtung langgestreckten, rechteckförmigen schulterseitigen Profilblock 1". Die Umfangsrichtung des Reifens ist jeweils durch einen Doppelpfeil U angedeutet.

Die Profilblöcke 1, 1', 1" sind in den beiden Umfangsrichtungen durch in Fig. 1 bis Fig. 3 lediglich andeutete Rillen 2 von weiteren nicht gezeigten und jeweils insbesondere analog gestalteten Profilblöcken getrennt, sodass die Profilblöcke 1, 1', 1"zu in Umfangsrichtung umlaufenden Profilblockreihen gehören. Die Rillen 2 verlaufen in Draufsicht gerade, parallel zueinander sowie zur axialen Richtung unter einem Winkel von 0° bis 50°, insbesondere von 5° bis 40°, und weisen in radialer Richtung eine Tiefe auf, die entweder der für den jeweiligen Fahrzeugluftreifen vorgesehenen Profiltiefe von üblicherweise 6,5 mm bis 13,0 mm entspricht oder die zumindest abschnittsweise eine Tiefe aufweisen, die geringer ist als die Profiltiefe.

In den Profilblöcken 1, 1', 1" sind jeweils drei Einschnitte 3 (Profilblock 1), 3' (Profilblock 1'), 3" (Profilblock 1") ausgebildet. Die drei Einschnitte 3, 3', 3" erstrecken sich in Draufsicht jeweils insgesamt gerade, parallel zueinander sowie parallel zu den Rillen 2, weisen eine Breite b₁ von 0,4 mm bis 0,8 mm, insbesondere von bis zu 0,6 mm, sowie in radialer Richtung eine maximale Tiefe von 75% bis 100%, insbesondere von höchstens 95%, der Profiltiefe auf. Jeder Einschnitt 3, 3', 3" setzt sich, in Draufsicht betrachtet, aus einem wellenförmig verlaufenden, mittleren Einschnittabschnitt 3a und zwei gerade verlaufenden, randseitigen Einschnittabschnitten 3b zusammen.

Die randseitigen Einschnittabschnitte 3b fluchten miteinander und weisen eine Tiefe von insbesondere 20% bis 70% der erwähnten maximalen Tiefe des Einschnittes 3, 3', 3" auf. Jeder Einschnitt 3, 3', 3" weist eine in Draufsicht gerade sowie in Erstreckungsrichtung und durch die Mitte der randseitigen Einschnittabschnitte 3b verlaufende Einschnittbasislinie l_{EB} auf, welche in Fig. 1 bis Fig. 3 beim jeweils obersten Einschnitt 3, 3', 3" eingezeichnet ist.

Der mittlere Einschnittabschnitt 3a verläuft in Draufsicht sowie über seine gesamte Tiefenerstreckung in Form einer harmonischen Welle mit einer Amplitude A und einer Wellenlänge λ (Fig. 1a), wobei die Amplitude A und die Wellenlänge λ entsprechend der Form einer harmonischen Welle jeweils konstant sind. Der mittlere Einschnittabschnitt 3a erstreckt sich über 50% bis 90% der entlang der Einschnittbasislinie l_{EB} ermittelten Erstreckungslänge des Einschnittes 3, 3', 3".

Anhand der Fig. 1a, welche eine vergrößerte Draufsicht auf einen randseitigen Teilbereich eines Einschnittes 3 zeigt, werden weitere, die Wellenform im mittleren Bereich der Einschnitte 3, 3', 3" betreffende Parameter erläutert. Es sind die bereits erwähnte Einschnittbasislinie l_{EB}, die den Ausbreitungsrichtungen der Welle des mittleren Einschnittabschnittes 3a entsprechende, im Beispiel gerade Wellenmittellinie lw und eine mittig dem Wellenverlauf des mittleren Einschnittabschnittes 3a folgende Wellenverlauflinie lwv eingezeichnet. Die Wellenlänge λ und die Amplitude A beziehen sich jeweils auf die Wellenverlauflinie lwv, wobei die Amplitude A in bekannter Weise relativ zur Wellenmittellinie l_{W} ermittelt ist. Die Einschnittbasislinie l_{EB} und die Wellenmittellinie lw verlaufen parallel zueinander und sind bei den in Fig. 1 bis Fig. 3 gezeigten Ausführungsbeispielen - entsprechend der erwähnten Erstreckungsrichtung der Einschnitte 3, 3', 3"- parallel zu den Rillen 2 ausgerichtet.

Der mittlere Einschnittabschnitt 3a jedes Einschnittes 3, 3', 3" setzt sich aus bezogen auf die Wellenverlauflinie lwv gerade verlaufenden Teilabschnitten 4a und gebogen verlaufenden Teilabschnitten 4b zusammen, wobei jeweils abwechselnd ein Teilabschnitt 4a auf einen Teilabschnitt 4b folgt (siehe insbesondere Fig. 1a) und der mittlere Einschnittabschnitt 3a endseitig jeweils einen gerade verlaufenden Teilabschnitt 4a aufweist. Die gerade verlaufenden Teilabschnitte 4a weisen jeweils eine entlang der Wellenverlauflinie lwv ermittelte Länge l (Fig. 1a) auf.

Wie Fig. 1 bis Fig. 3 zeigen, sind die Einschnitte 3, 3', 3" derart ausgeführt, dass jeweils die Wellenmittellinie lw gegenüber der Einschnittbasislinie l_{EB} in Umfangsrichtung U versetzt ist, sodass zwischen diesen Linien ein als gegenseitiger lichter Abstand ermittelter Versatz a₁ vorliegt, wobei bei den gezeigten Ausführungsbeispielen bei den jeweils innerhalb eines Profilblockes 1, 1', 1" befindlichen Einschnitten 3, 3', 3" die Wellenmittellinien lw gegenüber den Einschnittbasislinien l_{EB} in die gleiche Umfangsrichtung versetzt sind. Bei den in Fig. 1 gezeigten Einschnitten 3 beträgt der Versatz a₁ 100% der Amplitude A (siehe auch Fig. 1a), bei den in Fig. 2 gezeigten Einschnitten 3' beträgt der Versatz a₁ 200% der Amplitude A (nicht eingezeichnet), bei den in Fig. 3 gezeigten Einschnitten 3" beträgt der Versatz a₁ 300% der Amplitude A (nicht eingezeichnet). Die Einschnitte 3', 3" (Fig. 2, Fig. 3) weisen, bedingt durch ihren die Größe der Amplitude A übersteigenden Versatz a₁, zwischen den endseitigen Teilabschnitten 4a und den randseitigen Einschnittabschnitten 3b verlaufende kurze Übergangsabschnitte 4c auf, welche in Fortsetzung der endseitigen Teilabschnitte 4a verlaufen. Grundsätzlich beträgt der Versatz a₁ 75% bis 400%, insbesondere 100% bis 300%, besonders bevorzugt zumindest 200%, der jeweiligen Amplitude A.

Der beschriebene, auf die Amplitude A abgestimmte Versatz a₁ verringert die Wahrscheinlichkeit des Verfangens von kleinen Steinen in den Einschnitten 3, 3', 3". Derartige Steine stammen insbesondere von auf den Straßen verteiltem Streusplit (Winterstreu). Durch den Versatz a₁ öffnen sich die Einschnitte 3, 3`, 3" beim Abrollen des Reifens am Untergrund weniger als Einschnitte bekannter Ausführung. Die Öffnungsfähigkeit der Einschnitte 3, 3', 3" ist also verringert, wodurch die Wahrscheinlichkeit, dass sich in den Einschnitten 3. 3', 3" Steine verfangen, deutlich reduziert ist.

Gemäß bevorzugter Ausführungsvarianten sind der Maximalwert der Amplitude A und der Maximalwert der Wellenlänge λ auf die Größe (Siebdurchmesser) von üblichem Streusplit, wie noch erläutert wird, abgestimmt. Gemäß einer weiteren bevorzugten Variante ist auch der Maximalwert der Länge l der Teilabschnitte 4a auf die Größe von üblichem Streusplit abgestimmt, wie ebenfalls noch erläutert wird.

Auf Straßen eingesetzter Streusplit weist meist einen Siebdurchmesser von 2,0 mm bis 15,0 mm auf. Dabei neigt vor allem Streusplit mit einem Siebdurchmesser von 3,0 mm bis 8,0 mm dazu, sich in Einschnitten zu verklemmen. Zur Auslegung der Maximalwerte für die Amplitude A, die Wellenlänge λ und die Länge l wurde ein nomineller Siebdurchmesser von 5,0 mm festgelegt. Dabei wurden empirisch besonders vorteilhafte Werte für die Amplitude A, die Wellenlänge λ und die Länge l der Teilabschnitte 4a ermittelt. Die Amplitude A der Welle des mittleren Einschnittabschnittes 3a beträgt insbesondere zumindest der Breite b₁ des Einschnittes 3 und höchstens 1,6 mm. Der Maximalwert von 1,6 mm resultiert aus dem nominellen Siebdurchmesser geteilt durch 3. Ferner hat sich herausgestellt, dass die Wellenlänge λ der Welle des mittleren Einschnittabschnittes 3a mindestens das Fünffache der Breite b₁ des Einschnittes 3 und höchstens 4,4 mm betragen sollte. Der Maximalwert der Wellenlänge λ resultiert aus dem nominellen Siebdurchmesser geteilt durch 1,3. Drüber hinaus ist es vorteilhaft, wenn der Länge l der Teilabschnitte 4a im mittleren Einschnittabschnitt 3a 0,5 mm bis 0,9 mm beträgt, wobei der Maximalwert von 0,9 mm aus dem nominellen Siebdurchmesser geteilt durch 5,5 resultiert.

Die Erfindung ist auf die beschriebenen Ausführungsvarianten nicht beschränkt.

Die dem mittleren Einschnittabschnitt 3a zugrundeliegende, harmonische Welle ist insbesondere eine Sinus- bzw. Cosinuswelle, eine Reckteck-Welle, eine Dreieck-Welle, eine Sägezahn-Welle oder eine Trapez-Welle.

Die Einschnitte können bezogen auf die Einschnittbasislinie l_{EB} und die Wellenmittellinien lw in Draufsicht auch durchgehend gebogen (kreisbogenartig) verlaufen. Ferner können die Einschnitte in beliebigen Profilpositiven, daher beispielsweise auch in in Umfangsrichtung umlaufenden Profilrippen, ausgebildet sein. Darüber hinaus können die Einschnitte ein- oder beidseitig innerhalb der Profilpositive enden, sodass diese die Profilpositive nicht durchqueren. Die Einschnitte verlaufen zumindest in Gruppen und insbesondere zumindest innerhalb des jeweiligen Profilpositivs parallel zueinander sowie unter einem Winkel von 0° bis 50° zur axialen Richtung, wobei sich der Winkel bei Einschnitten mit gerader Einschnittbasislinie l_{EB} auf die Einschnittbasislinie l_{EB} und bei Einschnitten mit gebogener Einschnittbasislinie l_{EB} auf eine die Enden der Einschnittbasislinie l_{EB} verbindende gerade Linie bezieht. Die randseitigen Einschnittabschnitte 3b können eine mit dem mittleren Einschnittabschnitt 3a übereinstimmende Tiefe aufweisen.

### Bezugsziffernliste

- 1, 1', 1": Profilblock
- 2: Rille
- 3, 3`, 3``: Einschnitt
- 3a: mittlerer Einschnittabschnitt
- 3b: randseitiger Einschnittabschnitt
- 4a: Teilabschnitt
- 4b: Teilabschnitt
- 4c: Übergangsabschnitt
- A: Amplitude
- a₁: Versatz
- b₁: Breite
- l: Länge
- l_{EB}: Einschnittbasislinie
- l_{W}: Wellenmittellinie
- l_{WV}: Wellenverlauflinie
- U: Doppelpfeil (Umfangsrichtung)
- Z₁ₐ: Detail
- λ: Wellenlänge

## Patentansprüche

1. Fahrzeugluftreifen mit einem Laufstreifen mit Profilpositiven (1, 1', 1") mit Einschnitten (3, 3', 3"), welche in Draufsicht parallel zueinander und zur axialen Richtung unter einem Winkel von 0° bis 50° verlaufen, eine Breite (b₁) von 0,4 mm bis 0,8 mm, in Draufsicht einen in Form einer harmonischen Welle verlaufenden, mittleren Einschnittabschnitt (3a) mit einer der Ausbreitungsrichtung der Welle entsprechenden Wellenmittellinie (lw) und zwei randseitige Einschnittabschnitte (3b) aufweisen, deren Verlauf eine parallel zur Wellenmittellinie (l_{W}) verlaufenden Einschnittbasislinie (l_{EB}) definiert, wobei die Wellenmittellinie (lw) des mittleren Einschnittabschnittes (3a) zur Einschnittbasislinie (l_{B}) des Einschnittes (3) parallelversetzt verläuft und ein zwischen der Wellenmittellinie (l_{W}) und der Einschnittbasislinie (l_{EB}) als gegenseitiger lichter Abstand ermittelter Versatz (a₁) 75% bis 400% der Amplitude (A) der harmonischen Welle des mittleren Einschnittabschnittes (3a) beträgt, wobei sich der mittlere Einschnittabschnitt (3a) in Draufsicht aus gerade verlaufenden, jeweils die Wellenmittellinie (lw) querenden Teilabschnitten (4a) und gebogen verlaufenden Teilabschnitten (4b) zusammensetzt, wobei ein gerade verlaufender Teilabschnitt (4a) abwechselnd auf einen gebogen verlaufenden Teilabschnitt (4b) folgt,
**dadurch gekennzeichnet,**
**dass** die gerade verlaufenden Teilabschnitte (4a) jeweils eine Länge (l) von 0,5 mm bis 0,9 mm aufweisen.

2. Fahrzeugluftreifen nach Anspruch 1, **dadurch gekennzeichnet, dass** der zwischen der Wellenmittellinie (lw) und der Einschnittbasislinie (l_{EB}) ermittelte Versatz (a₁) 100% bis 300%, insbesondere zumindest 200%, der Amplitude (A) der harmonischen Welle des mittleren Einschnittabschnittes (3a) beträgt.

3. Fahrzeugluftreifen nach Anspruch 1 oder 2, **dadurch gekennzeichnet, dass** der zwischen der Wellenmittellinie (l_{W}) und der Einschnittbasislinie (l_{EB}) ermittelte Versatz (a₁) 100%, 200% oder 300% der Amplitude (A) der harmonischen Welle des mittleren Einschnittabschnittes (3a) beträgt.

4. Fahrzeugluftreifen nach einem der Ansprüche 1 bis 3, **dadurch gekennzeichnet, dass** sich der mittlere Einschnittabschnitt (3a) über 50% bis 90% der entlang der Einschnittbasislinie (l_{EB}) ermittelten Erstreckungslänge des Einschnittes (3, 3', 3") erstreckt.

5. Fahrzeugluftreifen nach einem der Ansprüche 1 bis 4, **dadurch gekennzeichnet, dass** die Amplitude (A) der harmonischen Welle des mittleren Einschnittabschnittes (3a) zumindest der Breite (b₁) des Einschnittes (3, 3', 3") entspricht und höchstens 1,6 mm beträgt.

6. Fahrzeugluftreifen nach einem der Ansprüche 1 bis 5, **dadurch gekennzeichnet, dass** die Wellenlänge (λ) der harmonischen Welle des mittleren Einschnittabschnittes (3a) mindestens das Fünffache der Breite (b₁) des Einschnittes (3, 3', 3") und höchstens 4,4 mm beträgt.

7. Fahrzeugluftreifen nach einem der Ansprüche 1 bis 6, **dadurch gekennzeichnet, dass** die Profilpositive (1, 1', 1"), welche mit den Einschnitten (3, 3', 3") versehen sind, Profilblöcke (1, 1', 1") einer in Umfangsrichtung umlaufenden Profilblockreihe sind.

8. Fahrzeugluftreifen nach einem der Ansprüche 1 bis 7, **dadurch gekennzeichnet, dass** die Breite (b₁) der Einschnitte (3, 3', 3") höchstens 0,6 mm beträgt.

9. Fahrzeugluftreifen nach einem der Ansprüche 1 bis 8, **dadurch gekennzeichnet, dass** die Einschnitte (3, 3', 3") die Profilpositive (1, 1', 1") durchqueren.

## Claims

1. Pneumatic vehicle tyre having a tread with profile positives (1, 1', 1") with sipes (3, 3', 3") which in plan view run parallel to one another and at an angle of 0° to 50° with respect to the axial direction and have a width (b₁) of 0.4 to 0.8 mm, in plan view a central sipe portion (3a) which runs in the form of a harmonic wave and has a wave centreline (l_{W}) corresponding to the propagation direction of the wave, and two edge sipe portions (3b), the course of which defines a sipe base line (l_{EB}) running parallel to the wave centreline (l_{W}), wherein the wave centreline (l_{W}) of the central sipe portion (3a) runs parallel to and offset with respect to the sipe base line (l_{B}) of the sipe (3) and an offset (a₁) determined as a mutual clear spacing between the wave centreline (l_{W}) and the sipe base line (l_{EB}) amounts to 75% to 400% of the amplitude (A) of the harmonic wave of the central sipe portion (3a), wherein, in plan view, the central sipe portion (3a) is composed of straight subportions (4a), which each cross the wave centreline (l_{W}), and curved subportions (4b), wherein a straight subportion (4a) alternately follows a curved subportion (4b),
**characterized**
**in that** the straight subportions (4a) each have a length (l) of 0.5 mm to 0.9 mm.

2. Pneumatic vehicle tyre according to Claim 1, **characterized in that** the offset (a₁) determined between the wave centreline (l_{W}) and the sipe base line (l_{EB}) amounts to 100% to 300%, in particular at least 200%, of the amplitude (A) of the harmonic wave of the central sipe portion (3a).

3. Pneumatic vehicle tyre according to Claim 1 or 2, **characterized in that** the offset (a₁) determined between the wave centreline (l_{W}) and the sipe base line (l_{EB}) amounts to 100%, 200% or 300% of the amplitude (A) of the harmonic wave of the central sipe portion (3a).

4. Pneumatic vehicle tyre according to any of Claims 1 to 3, **characterized in that** the central sipe portion (3a) extends over 50% to 90% of the length of extent of the sipe (3, 3', 3"), which is determined along the sipe base line (l_{EB}).

5. Pneumatic vehicle tyre according to any of Claims 1 to 4, **characterized in that** the amplitude (A) of the harmonic wave of the central sipe portion (3a) corresponds at least to the width (b₁) of the sipe (3, 3', 3") and is not more than 1.6 mm.

6. Pneumatic vehicle tyre according to any of Claims 1 to 5, **characterized in that** the wavelength (λ) of the harmonic wave of the central sipe portion (3a) is at least five times the width (b₁) of the sipe (3, 3', 3") and not more than 4.4 mm.

7. Pneumatic vehicle tyre according to any of Claims 1 to 6, **characterized in that** the profile positives (1, 1', 1") which are provided with the sipes (3, 3', 3") are profile blocks (1, 1', 1") of a profile block row running around in the circumferential direction.

8. Pneumatic vehicle tyre according to any of Claims 1 to 7, **characterized in that** the width (b₁) of the sipes (3, 3', 3") is not more than 0.6 mm.

9. Pneumatic vehicle tyre according to any of Claims 1 to 8, **characterized in that** the sipes (3, 3', 3") extend through the profile positives (1, 1', 1").

## Revendications

1. Pneumatique de véhicule avec une bande de roulement avec des éléments positifs de profil (1, 1', 1") avec des incisions (3, 3', 3") qui, en vue de dessus, s'étendent parallèlement les unes aux autres et par rapport à la direction axiale selon un angle de 0° à 50°, présentent une largeur (b₁) de 0,4 mm à 0,8 mm, en vue de dessus une section d'incision centrale (3a) s'étendant sous la forme d'une onde harmonique avec une ligne centrale d'onde (Iw) correspondant à la direction de propagation de l'onde et deux sections d'incision marginales (3b) dont le tracé définit une ligne de base d'incision (l_{EB}) s'étendant parallèlement à la ligne centrale d'onde (Iw), la ligne centrale d'onde (l_{W}) de la section d'incision centrale (3a) s'étendant en décalage parallèlement à la ligne de base d'incision (l_{B}) de l'incision (3) et un décalage (a₁) déterminé entre la ligne centrale d'onde (Iw) et la ligne de base d'incision (l_{EB}) comme distance libre mutuelle étant de 75 % à 400 % de l'amplitude (A) de l'onde harmonique de la section d'incision centrale (3a), la section d'incision centrale (3a) se composant, en vue de dessus, de sections partielles (4a) s'étendant en ligne droite, traversant respectivement la ligne centrale d'onde (Iw) et de sections partielles (4b) s'étendant en courbe, une section partielle (4a) s'étendant en ligne droite succédant alternativement à une section partielle (4b) s'étendant en courbe,
**caractérisé en ce que**
les sections partielles (4a) s'étendant en ligne droite présentent chacune une longueur (l) de 0,5 mm à 0,9 mm.

2. Pneumatique de véhicule selon la revendication 1, **caractérisé en ce que** le décalage (a₁) déterminé entre la ligne centrale d'onde (l_{W}) et la ligne de base d'incision (l_{EB}) est de 100 % à 300 %, notamment d'au moins 200%, de l'amplitude (A) de l'onde harmonique de la section d'incision centrale (3a).

3. Pneumatique de véhicule selon la revendication 1 ou 2, **caractérisé en ce que** le décalage (a₁) déterminé entre la ligne centrale d'onde (l_{W}) et la ligne de base d'incision (l_{EB}) est de 100 %, 200 % ou 300 % de l'amplitude (A) de l'onde harmonique de la section d'incision centrale (3a).

4. Pneumatique de véhicule selon l'une quelconque des revendications 1 à 3, **caractérisé en ce que** la section d'incision centrale (3a) s'étend sur 50 % à 90 % de la longueur d'extension de l'incision (3, 3', 3") déterminée le long de la ligne de base d'incision (l_{EB}).

5. Pneumatique de véhicule selon l'une quelconque des revendications 1 à 4, **caractérisé en ce que** l'amplitude (A) de l'onde harmonique de la section d'incision centrale (3a) correspond au moins à la largeur (b₁) de l'incision (3, 3', 3") et est au plus de 1,6 mm.

6. Pneumatique de véhicule selon l'une quelconque des revendications 1 à 5, **caractérisé en ce que** la longueur d'onde (λ) de l'onde harmonique de la section d'incision centrale (3a) est au moins de cinq fois la largeur (b₁) de l'incision (3, 3', 3") et au plus de 4,4 mm.

7. Pneumatique de véhicule selon l'une quelconque des revendications 1 à 6, **caractérisé en ce que** les éléments positifs de profil (1, 1', 1") pourvus des incisions (3, 3', 3") sont des blocs de profil (1, 1', 1") d'une rangée de blocs de profil périphérique dans la direction circonférentielle.

8. Pneumatique de véhicule selon l'une quelconque des revendications 1 à 7, **caractérisé en ce que** la largeur (b₁) des incisions (3, 3', 3") est au plus de 0,6 mm.

9. Pneumatique de véhicule selon l'une quelconque des revendications 1 à 8, **caractérisé en ce que** les incisions (3, 3', 3") traversent les éléments positifs de profil (1, 1', 1").
